# FASCICULE DE BREVET EUROPEEN

(11) **EP 0 705 032 B1**
(45) Date de publication et mention de la délivrance du brevet: **04.08.1999**
(21) Numéro de dépôt: 95202527.8
(22) Date de dépôt: 19.09.1995
(51) Int. Cl.: H04N 5/44, H04N 5/765

(54) **Dispositif de commutation pour un appareil de télévision**
Umschaltvorrichtung für ein Fernsehgerät
Switching device for a television apparatus

(30) Priorité: 28.09.1994 FR 9411587
(43) Date de publication de la demande: 03.04.1996
(73) Titulaire: PHILIPS ELECTRONIQUE GRAND PUBLIC, 92150 Suresnes (FR); Koninklijke Philips Electronics N.V., 5621 BA Eindhoven (NL)
(72) Inventeur: Decraemer, Alain, F-75008 Paris (FR)
(74) Mandataire: Caron, Jean

(56) Documents cités:
- EP-A- 0 046 108
- EP-A- 0 309 891
- EP-A- 0 439 982
- EP-A- 0 507 433
- EP-A- 0 604 167
- WO-A-91/00675
- DE-A- 3 140 814
- DE-A- 3 515 995
- FR-A- 2 573 268
- FR-A- 2 583 945
- FR-A- 2 613 163
- GB-A- 2 266 637
- US-A- 5 299 011

## Description

La présente invention concerne un appareil récepteur de télévision ou un moniteur de télévision comprenant des moyens pour afficher une image à partir de signaux vidéo, au moins un premier et un second connecteur spécialisé pour connecter à l'appareil des signaux vidéo provenant d'une source de signal vidéo externe, un processeur logique, un commutateur dit d'affichage commandé par le processeur logique en réponse à une commande d'un utilisateur pour sélectionner le signal d'une source vidéo parmi une pluralité de sources vidéo afin d'afficher l'image correspondante, un commutateur dit de sortie commandé par le processeur logique pour envoyer vers une borne de sortie d'un des connecteurs un signal d'une source vidéo parmi la pluralité de sources vidéo.

Des connecteurs spécialisés sont bien connus sous l'appellation SCART ou Peritel. Il existe aussi des connecteurs dits CINCH ou S-Video.

Un appareil selon le préambule ci-dessus est connu de la demande de brevet EP-A- 0 507 433. Le dispositif selon ce document comporte un ensemble de commutateurs pour réaliser des commutations, en entrée ou en sortie d'un téléviseur et de différents appareils périphériques, reliés les uns aux autres par des câbles et des connecteurs. Son but est de faciliter l'utilisation d'un téléviseur, grâce à l'établissement automatique de certaines connexions, soit en réponse à des commandes de l'utilisateur, soit automatiquement à partir de tensions de commande ou de signal disponibles sur une sortie de chacun des appareils périphériques, sans que l'utilisateur ait besoin d'intervenir. Ce système est toutefois très "autoritaire", en ce sens qu'il peut dans certains cas conduire à des sélections non désirées par l'usager.

Un but de l'invention est de réaliser automatiquement certaines des commutations d'une manière qui ne risque pas de contrarier les désirs de l'usager.

A cet effet, le téléviseur ou moniteur de télévision selon l'invention est remarquable en ce que, le premier connecteur spécialisé étant placé sur la face arrière d'un coffret habillant l'appareil, le second connecteur spécialisé est scindé en deux parties dont l'une est un élément de connexion dit arrière, placé sur la face arrière du coffret, et l'autre est un élément de connexion dit avant, placé sur la façade du coffret, le signal sélectionné par le commutateur de sortie est amené à une borne de sortie de l'élément de connexion arrière du second connecteur spécialisé, et le processeur logique est muni de moyens pour commander la sélection, par le commutateur de sortie, d'un signal prélevé, soit à l'entrée de l'élément de connexion avant, quand un signal y est présent et que le commutateur d'affichage sélectionne une des entrées du second connecteur spécialisé, soit à partir d'une autre source de signal, dans le cas contraire.

Ainsi l'établissement de la connexion de sortie qui a le plus de chances d'être correcte se fait sans intervention de l'utilisateur.

L'appareil comportant en outre une source de signal vidéo interne, le processeur logique est avantageusement muni de moyens pour commander la sélection, par le commutateur de sortie, du signal de la source interne quand aucun signal n'est présent à l'entrée de l'élément de connexion avant, et qu'en plus le commutateur d'affichage sélectionne une des entrées du second connecteur spécialisé.

Ainsi on peut brancher sans problème sur l'élément de connection arrière un désembrouilleur d'émission embrouillée (par exemple du genre "Canal +").

Dans un premier mode de réalisation, l'appareil comporte un commutateur, dit avant/arrière, pour sélectionner et amener au commutateur d'affichage, soit le signal d'une borne d'entrée de l'élément de connexion avant, soit le signal d'une borne d'entrée de l'élément de connexion arrière.

Ce commutateur avant/arrière est avantageusement commandé par un circuit détecteur qui provoque la sélection du signal de l'élément de connexion avant s'il détecte la présence d'un signal vidéo sur la borne d'entrée de l'élément de connexion avant.

Ainsi l'établissement de la connexion d'entrée qui a le plus de chances d'être correcte se fait sans intervention de l'utilisateur.

Lorsque ce premier mode de réalisation est choisi et que l'appareil comporte en outre une source de signal vidéo interne, le commutateur d'affichage est avantageusement à au moins trois positions qui correspondent à la sélection vers les moyens d'affichage, soit du signal provenant de la source de signal vidéo interne, soit du signal d'une borne d'entrée vidéo du premier connecteur spécialisé, soit du signal sélectionné par le commutateur avant/arrière.

Pour l'utilisateur, la sélection correspondant à l'affichage du signal de la source interne est repérée par le nom "INT", celle correspondant à l'affichage du signal d'entrée du premier connecteur spécialisé par le nom "EXT 1", et celle correspondant à l'affichage du signal d'entrée de l'un des éléments avant ou arrière par le nom "EXT 2". Puisque le choix de l'élément de connexion avant ou de l'élément de connexion arrière est fait automatiquement par l'appareil, si par exemple un magnétoscope est branché sur l'élément de connexion arrière, et un camescope sur l'élément de connexion avant, il est possible de visionner l'image du camescope tout en l'enregistrant, sans devoir commander autre chose que "EXT 2".

Dans un second mode de réalisation, l'appareil comportant toujours une source de signal vidéo interne, le commutateur d'affichage est à au moins quatre positions qui correspondent à la sélection vers les moyens d'affichage, soit du signal provenant de la source de signal vidéo interne, soit du signal d'une borne d'entrée vidéo du premier connecteur spécialisé, soit du signal de la borne d'entrée de l'élément de connexion arrière du second connecteur spécialisé, soit du signal de la borne d'entrée de l'élément de connexion avant du second connecteur spécialisé.

Pour choisir entre les deux positions du commutateur d'affichage à quatre positions citées en dernier, le processeur logique s'appuie sur une information, délivrée par un circuit détecteur, qui provoque la sélection du signal d'entrée de l'élément de connexion avant quand le circuit détecteur détecte la présence d'un signal vidéo sur cet élément avant.

Ce second mode de réalisation donne à l'utilisateur les mêmes avantages que le premier.

Le circuit détecteur est avantageusement d'un type basé sur la détection d'impulsions de synchronisation.

L'élément de connexion avant étant pourvu d'une borne de chrominance pour l'entrée d'un signal de chrominance séparé, et l'élément de connexion arrière étant pourvu d'une borne d'entrée/sortie de chrominance pour l'entrée ou la sortie d'un signal de chrominance séparé, le dispositif est avantageusement muni d'une liaison directe entre la borne de chrominance de l'élément de connexion avant et la borne d'entrée/sortie de chrominance de l'élément de connexion arrière.

Cette caractéristique simplifie la réalisation en évitant des commutations inutiles. Elle s'appuie sur la remarque qu'en principe lorsqu'un signal de chrominance est présent sur l'élément de connexion avant, le signal désiré en sortie de l'élément de connexion arrière est quasiment toujours le signal d'entrée de l'élément de connexion avant.

Ces aspects de l'invention ainsi que d'autres aspects plus détaillés apparaîtront plus clairement grâce à la description suivante d'un mode de réalisation non limitatif.

La figure 1 représente schématiquement et partiellement un appareil muni d'un système de commutation selon l'invention, dans un premier mode de réalisation.

La figure 2 représente schématiquement et partiellement le même appareil muni d'un système de commutation selon l'invention, dans un second mode de réalisation .

Le coffret d'un téléviseur ou d'un moniteur est équipé en général d'une pluralité de prises ou connecteurs pour brancher différents appareils tels que : magnétoscope, camescope, lecteur de vidéo-disque, décodeur d'émissions cryptées, lecteur de CD-I, etc. Certains de ces appareils sont exclusivement des sources de signal (camescope, lecteur de vidéo-disque, lecteur de CD-I), et d'autres sont à certains moments des sources, et à d'autres moments des récepteurs de signal (magnétoscope) ou aussi les deux en même temps (décodeur d'émissions cryptées).

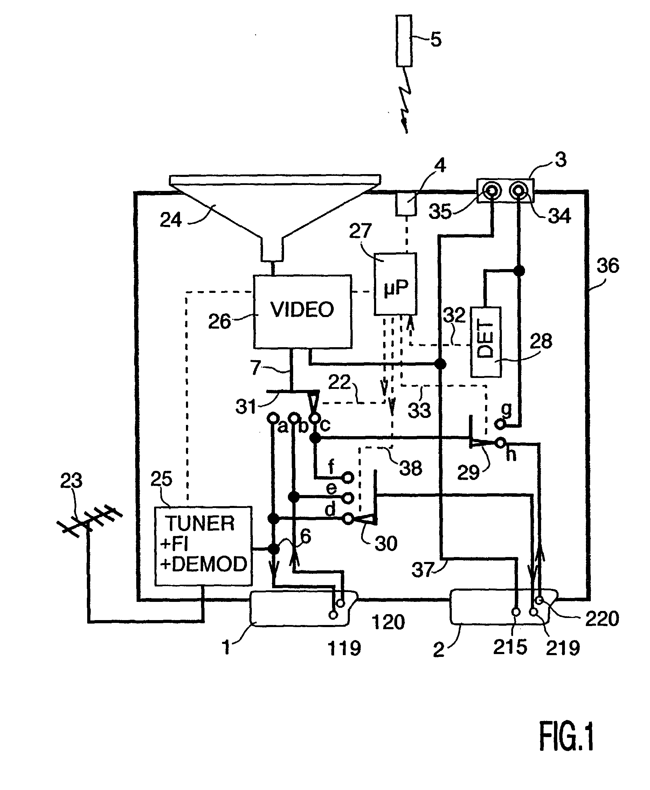

L'appareil qui est représenté schématiquement par la figure 1 est habillé d'un coffret 36. Il comprend un processeur logique 27 pour gérer certaines de ses fonctions, et des moyens d'affichage de signaux vidéo, constitués principalement par un amplificateur vidéo 26 et un tube écran 24.

Il est muni d'un connecteur spécialisé 1, par exemple du type normalisé dit SCART ou PERITEL, pour lequel les signaux portés par chacune des broches sont définis par une norme. Dans le cas d'un connecteur SCART, sa broche n° 20, référencée 120 sur le dessin, est une entrée de signal composite vidéo, et sa broche n° 19, référencée 119 sur le dessin, est une sortie de signal composite vidéo.

Le coffret porte aussi un second connecteur spécialisé scindé en deux parties 2 et 3.

La partie 2, placée sur la face arrière du coffret, a une définition géométrique et comporte un motif de broches qui correspond à celui d'un connecteur normalisé PERITEL, et la plupart de ses broches portent des signaux qui correspondent à la susdite norme. A l'exemple d'un standard PERITEL, sa broche n° 20, référencée 220 sur le dessin, est une entrée de signal composite vidéo, et sa broche n° 19, référencée 219 sur le dessin, est une sortie de signal composite vidéo. Néanmoins une ou plusieurs de ses broches ont un usage qui est défini librement par le constructeur de l'appareil, par exemple sa broche n° 15, référencée 215 sur le dessin, est ici une broche d'entrée/sortie de signal de chrominance, séparé d'un signal de luminance.

La partie 3, placée sur la façade du coffret, comporte par exemple des prises 34 et 35 de type dit "cinch" ou "RCA", et/ou un connecteur spécial de type "S-VHS". Les deux prises 34, 35 sont uniquement des entrées de signal, la prise 34 pour un signal composite ou pour un signal de luminance, et la prise 35 pour un signal de chrominance séparé.

Un commutateur 29 dit "avant/arrière" à deux positions g, h permet de sélectionner soit (position g) le signal de la borne d'entrée 34 de l'élément de connexion avant 3 soit (position h) le signal de la borne d'entrée 220 de l'élément de connexion arrière 2.

Le commutateur 29 avant/arrière est commandé par un circuit 28 qui détecte la présence d'un signal vidéo sur la borne d'entrée 34 de l'élément de connexion avant et qui informe le processeur logique par une connexion de données 32. Le processeur logique à son tour, commande, en cas de détection d'un signal, la position g pour le commutateur 29, c'est-à-dire la sélection du signal de la prise 34.

Le circuit 28 détectant la présence d'un signal vidéo est par exemple d'un type connu basé sur la détection d'impulsions de synchronisation.

Les signaux vidéo à afficher peuvent aussi, dans le cas d'un téléviseur, provenir d'une source 25 de signal vidéo, interne à l'appareil. Une antenne 23 fournit des signaux haute-fréquence à cette source interne 23 qui comporte un circuit de syntonisation dit "tuner", un amplificateur à fréquence intermédiaire, et un démodulateur, et fournit un signal vidéo composite sur sa sortie 6.

Un commutateur 31 dit d'affichage amène à l'entrée de l'amplificateur vidéo 26, via une connexion 7, différents signaux au choix de l'utilisateur. Pour communiquer son choix, ce dernier dispose d'un dispositif de télécommande 5 par exemple émetteur de signaux infra-rouge, qui sont reçus par un dispositif récepteur de télécommande 4 et transmis à un processeur logique 27 qui gère l'ensemble des fonctions de l'appareil. Ce commutateur d'affichage 31 est à trois positions a, b, c et amène aux moyens d'affichage soit (position a) le signal interne dit "INT" provenant du récepteur d'images 25, soit (position b) le signal dit "EXT 1" de la borne d'entrée vidéo 120 du connecteur spécialisé 1, soit (position c) le signal dit "EXT 2" sélectionné par le commutateur avant/arrière 29.

Un commutateur 30 dit de sortie amène un signal sur la broche de sortie vidéo composite 219 de l'élément de connexion arrière. Contrairement au cas du commutateur d'affichage 31, le signal n'est pas choisi directement par l'utilisateur, mais par le processeur logique, en fonction de différentes données. Le commutateur 30 est à trois positions d, e, f et sélectionne soit (position d) le signal provenant du récepteur d'images interne 25, soit (position e) le signal de la borne d'entrée vidéo 120 du connecteur spécialisé (1), soit (position f) le signal sélectionné par le commutateur avant/arrière 29.

Le processeur logique commande le commutateur 30 en tenant compte du choix qui a été fait pour le commutateur 31 et aussi de la présence ou non d'un signal sur l'élément de connexion avant, de la façon suivante :
- lorsque le commutateur d'affichage 31 sélectionne le signal (INT) provenant du récepteur d'images interne, le processeur logique commande la sélection du même signal par le commutateur de sortie 30,
- lorsque le commutateur d'affichage sélectionne le signal (EXT 1) de la borne d'entrée 119 du connecteur, le processeur logique commande la sélection par le commutateur de sortie 30 de ce même signal,
- mais, lorsque le commutateur d'affichage 31 sélectionne le signal (EXT 2) de l'une des parties 2 ou 3 du second connecteur spécialisé, c'est-à-dire sélectionne le signal fourni par le commutateur avant/arrière 29, alors le commutateur 30 ne sélectionne pas le même signal que le commutateur 31. Le processeur logique commande alors le commutateur de sortie 30 de la façon suivante :
- quand un signal est présent sur la prise d'entrée 34 de l'élément de connexion avant, il commande la position f du commutateur 30
- dans le cas contraire, il commande la position "d" du commutateur 30, c'est-à-dire la sélection du signal de la source interne 25.

Une connexion directe 37 est prévue entre la borne de chrominance 35 de l'élément de connexion avant et la borne d'entrée/sortie de chrominance 215 de l'élément de connexion arrière. C'est seulement lorsqu'un signal de chrominance est présent sur l'élément de connexion avant que ce même signal est utilisé en tant que signal de sortie par l'élément de connexion arrière, et la connexion 37 peut donc être établie en permanence. Cette connexion est reliée aussi, sans commutation, à une entrée de chrominance de l'amplificateur vidéo 26. Ce dernier travaille donc soit à partir d'un signal composite sur la connexion 7, soit à partir d'un signal de luminance sur la connexion 7 et d'un signal de chrominance sur la connexion 37.

Bien entendu, l'appareil est également muni de commutateurs pour commuter des signaux audio présents en sortie du récepteur d'images interne ou sur les connecteurs, en leur appliquant en même temps les mêmes commutations qui sont appliquées aux signaux vidéo. Il n'est pas nécessaire de prévoir un détecteur de la présence d'un signal audio : la commutation correspondante est commandée par la détection d'un signal vidéo sur l'élément de connexion avant 34. Les élément de connexions de connexion et de commutation audio ne sont pas représentés pour ne pas compliquer le dessin, mais sont facilement installés par l'homme du métier : chacune des connexions représentées doit être comprise comme une connexion à trois fils (vidéo composite, son gauche, son droit), et chaque commutateur comme un commutateur à trois circuits. Les commutateurs sont en pratique tous des commutateurs électroniques susceptibles d'être commandés par un signal électrique.

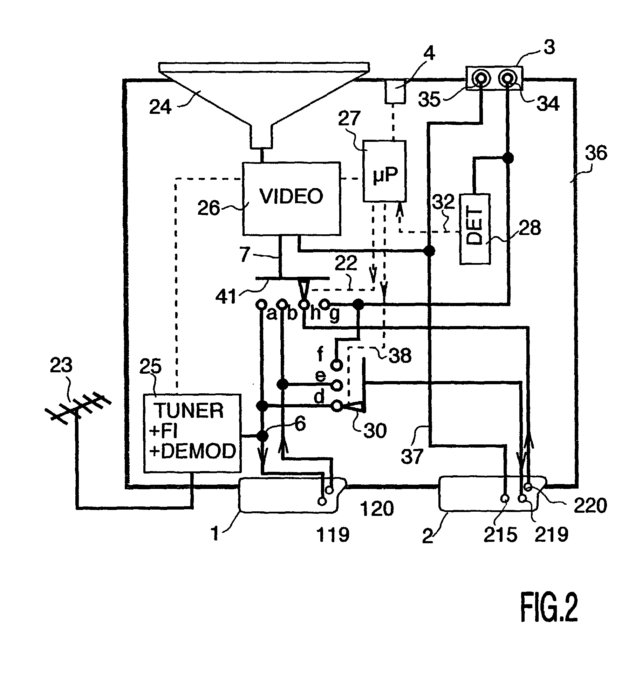

Une seconde forme de réalisation est représentée à la figure 2. L'ensemble des deux commutateurs 31 et 29 de la figure 1 y est remplacé par un seul commutateur 41 à quatre positions, les bornes correspondantes étant reliées respectivement soit (position a) au signal provenant du récepteur d'images interne 25, soit (position b) au signal de la borne d'entrée vidéo 120 du connecteur spécialisé 1, soit (position h) au signal de la borne d'entrée 220 de l'élément de connexion arrière, soit (position g) au signal de la borne d'entrée 34 de l'élément de connexion avant. Ce commutateur 41 n'est pas commandé directement par l'utilisateur au moyen de la télécommande 5, mais par le processeur logique qui interprète les ordres de l'utilisateur. De ce fait, dans le cas où l'utilisateur demande à visionner le signal "EXT 2", le processeur logique sélectionnera la position h du commutateur à quatre positions (borne d'entrée 220 de l'élément de connexion arrière) dans le cas où aucun signal n'est présent sur l'élément de connexion avant 34, et la position g (borne d'entrée 34 de l'élément de connexion avant) dans le cas où un signal y est présent. Avec un tel arrangement, le commutateur 30 est toujours à trois positions, sa position f étant reliée à l'entrée 34.

## Revendications

1. Appareil récepteur de télévision ou moniteur de télévision de comprenant :
- des moyens pour afficher une image à partir de signaux vidéo,
- au moins un premier et un second connecteur spécialisé pour connecter à l'appareil des signaux vidéo provenant d'une source de signal vidéo externe,
- un microprocesseur,
- un commutateur dit d'affichage, commandé par le microprocesseur en réponse à une commande d'un utilisateur, pour sélectionner le signal d'une source vidéo parmi une pluralité de sources vidéo, afin d'afficher l'image correspondante,
- un commutateur dit de sortie, commandé par le microprocesseur, pour envoyer vers une borne de sortie d'un des connecteurs un signal d'une source vidéo parmi la pluralité de sources vidéo,
**caractérisé en ce que**, le premier connecteur spécialisé (1) étant placé sur la face arrière d'un coffret habillant l'appareil,
- le second connecteur spécialisé comporte deux parties dont l'une est un élément de connexion dit arrière (2), placé sur la face arrière du coffret, et l'autre est un élément de connexion dit avant (3), placé sur la façade du coffret,
- le signal sélectionné par le commutateur de sortie (30) est amené à une borne de sortie (219) de l'élément de connexion arrière du second connecteur spécialisé,
- et le microprocesseur est muni de moyens pour commander la sélection, par le commutateur de sortie (30), d'un signal prélevé
- soit à l'entrée (34) de l'élément de connexion avant, quand un signal y est présent et que le commutateur d'affichage (31, 41) sélectionne une des entrées (34 ou 220) du second connecteur spécialisé,
- soit à partir d'une autre source de signal, dans le cas contraire.

2. Dispositif selon la revendication 1, **caractérisé en ce** **que** l'appareil comporte en outre une source de signal vidéo interne et le processeur logique est muni de moyens pour commander la sélection, par le commutateur de sortie (30), du signal (6) de la source interne quand aucun signal n'est présent à l'entrée de l'élément de connexion avant (34), et qu'en plus le commutateur d'affichage (31, 41) sélectionne une des entrées (34 ou 220) du second connecteur spécialisé.

3. Dispositif selon la revendication 1, **caractérisé en ce qu**'il comporte un commutateur (29), dit avant/arrière, pour sélectionner et amener au commutateur d'affichage (31), soit le signal d'une borne d'entrée (34) de l'élément de connexion avant, soit le signal d'une borne d'entrée (220) de l'élément de connexion arrière.

4. Dispositif selon la revendication 3, **caractérisé en ce que** le commutateur avant/arrière (29) est commandé par un circuit détecteur (28) qui provoque la sélection du signal de l'élément de connexion avant (3) s'il détecte la présence d'un signal vidéo sur la borne d'entrée (34) de l'élément de connexion avant.

5. Dispositif selon la revendication 4, **caractérisé en ce que** le circuit détecteur (28) est d'un type basé sur la détection d'impulsions de synchronisation.

6. Dispositif selon la revendication 3, **caractérisé en ce que**, l'appareil comportant en outre une source de signal vidéo interne (25), le commutateur d'affichage (31) est à au moins trois positions qui correspondent à la sélection vers les moyens d'affichage (24, 26),
- soit du signal (a) provenant de la source de signal vidéo interne,
- soit du signal (b) d'une borne d'entrée vidéo (120) du premier connecteur spécialisé,
- soit du signal (c) sélectionné par le commutateur avant/arrière.

7. Dispositif selon la revendication 1, **caractérisé en ce que**, l'appareil comportant en outre une source de signal vidéo interne (25), le commutateur d'affichage (41) est à au moins quatre positions qui correspondent à la sélection vers les moyens d'affichage,
- soit du signal (a) provenant de la source de signal vidéo interne,
- soit du signal (b) d'une borne d'entrée vidéo du premier connecteur spécialisé,
- soit du signal (h) de la borne d'entrée (220) de l'élément de connexion arrière du second connecteur spécialisé,
- soit du signal (g) de la borne d'entrée (34) de l'élément de connexion avant du second connecteur spécialisé.

8. Dispositif selon la revendication 7, **caractérisé en ce que**, pour choisir entre celles des deux positions (h, g) du commutateur d'affichage à quatre positions qui correspondent à la sélection d'une borne du second connecteur spécialisé, le processeur logique s'appuie sur une information, délivrée par un circuit détecteur (28), qui provoque la sélection du signal d'entrée de l'élément de connexion avant (3) quand le circuit détecteur détecte la présence d'un signal vidéo sur cet élément avant.

9. Dispositif selon la revendication 8, **caractérisé en ce que** le circuit détecteur (28) est d'un type basé sur la détection d'impulsions de synchronisation.

10. Dispositif selon la revendication 1, **caractérisé en ce que**, l'élément de connexion avant (3) étant pourvu d'une borne de chrominance (35) pour l'entrée d'un signal de chrominance séparé, et l'élément de connexion arrière (2) étant pourvu d'une borne d'entrée/sortie (215) de chrominance pour l'entrée ou la sortie d'un signal de chrominance séparé, le dispositif est muni d'une liaison directe (37) entre la borne de chrominance (35) de l'élément de connexion avant et la borne d'entrée/sortie (215) de chrominance de l'élément de connexion arrière.

## Patentansprüche

1. Fernsehempfangsgerät oder Fernsehmonitor mit:
- Mitteln zum Anzeigen eines Bilds anhand von Bildsignalen,
- mindestens einem ersten und zweiten Spezialanschluß zum Verbinden des Geräts mit Bildsignalen aus einer externen Bildsignalquelle,
- einem Mikroprozessor,
- einer sogenannten Anzeige-Umschaltvorrichtung, gesteuert vom Mikroprozessor als Reaktion auf eine Anwenderbedienung zur Auswahl des Signals einer Bildquelle unter einer Vielzahl an Bildquellen, um das entsprechende Bild anzuzeigen,
- einer sogenannte Ausgangs-Umschaltvorrichtung, gesteuert vom Mikroprozessor, um an die Ausgangsklemme einer der Anschlüsse ein Signal einer Bildquelle unter der Vielzahl an Bildquellen zu senden,
dadurch gekennzeichnet, daß der erste Spezialanschluß (1) auf der Rückseite des Gehäuses des Geräts angebracht wird,
- der zweite Spezialanschluß zwei Teile enthält, von denen der eine ein auf der Rückseite des Gehäuses angebrachtes, sogenanntes hinteres Anschlußelement (2) und der andere ein auf der Vorderseite des Gehäuses angebrachtes, sogenanntes vorderes Anschlußelement (3) ist,
- das von der Ausgangs-Umschaltvorrichtung (30) gewählte Signal an die Ausgangsklemme (219) des hinteren Anschlußelements des zweiten Spezialanschlusses gebracht wird,
- und der Mikroprozessor über die Ausgangs-Umschaltvorrichtung (30) mit Mitteln zur Steuerung der Auswahl eines entnommenen Signals versehen ist,
- entweder am Eingang (34) des vorderen Anschlußelements, wenn ein Signal dort vorhanden ist und die Anzeige-Umschaltvorrichtung (31, 41) einen der Eingänge (34 oder 220) des zweiten Spezialanschlusses wählt,
- oder im gegenteiligen Fall ausgehend von einer anderen Signalquelle.

2. Vorrichtung nach Anspruch 1, dadurch gekennzeichnet, daß das Gerät zudem eine interne Bildsignalquelle enthält und der logische Prozessor über die Ausgangs-Umschaltvorrichtung (30) mit Mitteln zur Steuerung der Auswahl des Signals (3) der internen Quelle versehen ist, wenn keinerlei Signal am Eingang des vorderen Anschlußelements (34) vorhanden ist und zudem die Anzeige-Umschaltvorrichtung (31, 41) einen der Eingänge (34, 220) des zweiten Spezialanschlusses wählt.

3. Vorrichtung nach Anspruch 1, dadurch gekennzeichnet, daß es eine sogenannte Vorderseiten/Rückseiten-Umschaltvorrichtung (29) zur Auswahl und dem Zuführen an die Anzeige-Umschaltvorrichtung (31) entweder des Signals einer Eingangsklemme (34) des vorderen Anschlußelements oder des Signals einer Eingangsklemme (220) des hinteren Anschlußelements enthält.

4. Vorrichtung nach Anspruch 3, dadurch gekennzeichnet, daß diese Vorderseiten/Rückseiten-Umschaltvorrichtung (29) wird vorzugsweise über eine Detektorschaltung (28) gesteuert wird, die die Auswahl des Signals des vorderen Anschlußelements (3) bewirkt, wenn sie das Vorhandensein eines Bildsignals an der Eingangsklemme (34) des vorderen Anschlußelements feststellt.

5. Vorrichtung nach Anspruch 4, dadurch gekennzeichnet, daß die Detektorschaltung (28) vom auf dem Erfassen von Synchronisationsimpulsen gründenden Typs ist.

6. Vorrichtung nach Anspruch 3, dadurch gekennzeichnet, daß das Gerät zudem eine interne Bildsignalquelle enthält (25), hat die Anzeige-Umschaltvorrichtung (31) mindestens drei Positionen, die der Auswahl zu den Anzeigemitteln (24, 26) entsprechen,
- entweder des von einer internen Bildsignalquelle kommenden Signals (a)
- oder des Signals (b) einer Bildeingangsklemme (120) des ersten Spezialanschlusses
- oder des von der Vorderseiten/Rücksteiten-Umschaltvorrichtung gewählten Signals (c).

7. Vorrichtung nach Anspruch 1, dadurch gekennzeichnet, daß das Gerät zudem eine interne Bildsignalquelle (25) enthält, die Anzeige-Umschaltvorrichtung (41) mindestens vier Positionen hat, die der Auswahl zu den Anzeigemitteln entsprechen,
- entweder des von einer internen Bildsignalquelle kommenden Signals (a)
- oder des Signals (b) einer Bildeingangsklemme des ersten Spezialanschlusses
- oder des Signals (h) der Eingangsklemme (220) des hinteren Anschlußelements des zweiten Spezialanschlusses
- oder des Signals (g) der Eingangsklemme (34) des vorderen Anschlußelements des zweiten Spezialanschlusses.

8. Vorrichtung nach Anspruch 7, dadurch gekennzeichnet, daß zur Wahl zwischen den zwei Positionen (h, g) der Anzeige-Umschaltvorrichtung mit vier Positionen, die der Auswahl einer Klemme des zweiten Spezialanschlusses entsprechen, sich der logische Prozessor auf eine von einer Detektorschaltung (28) gelieferte Information stützt, die die Auswahl des Eingangssignals des vorderen Anschlußelements (3) bewirkt, wenn die Detektorschaltung das Vorhandensein eines Bildsignals an diesem vorderen Element lokalisiert.

9. Vorrichtung nach Anspruch 8, dadurch gekennzeichnet, daß diese Detektorschaltung (28) vorzugsweise eines auf der Lokalisierung von Synchronisationsimpulsen gründenden Typs ist.

10. Vorrichtung nach Anspruch 1, dadurch gekennzeichnet, daß das vordere Anschlußelement (3) mit einer Chrominanzklemme (35) für den Eingang des gesonderten Chrominanzsignals und das hintere Anschlußelement (2) mit einer Eingangs/Ausgangs-Chrominanzklemme (215) für den Eingang oder den Ausgang des gesonderten Chrominanzsignals versehen ist, die Vorrichtung mit einer direkten Verbindung (37) zwischen der Chrominanzklemme (35) des vorderen Anschlußelements und der Eingangs/Ausgangs-Chrominanzklemme (215) des hinteren Anschlußelements versehen ist.

## Claims

1. A television receiver or a television monitor comprising:
- means for displaying an image based on video signals,
- at least a first and a second special connector for applying video signals from an external video signal source to the apparatus,
- a microprocessor,
- a display switch controlled by the microprocessor in response to a user command for selecting the signal from one video source among a plurality of video sources for displaying the corresponding image,
- an output switch controlled by the microprocessor for applying a signal from one video source among the plurality of video sources to an output terminal of one of the connectors,
- characterized in that the first special connector (1) is provided on the rear wall of a cabinet housing the apparatus,
- the second special connector is split up into two parts, one of which is a rear-end connection element (2) provided on the rear wall of the cabinet and the other is a front-end connection element (3) provided at the front of the cabinet,
- the signal selected by the output switch (30) is applied to an output terminal (219) of the rear-end connection element of the second special connector,
- and the microprocessor is provided with means for controlling the selection by the output switch (30) of a signal either taken from
- the input (34) of the front-end connection element when a signal is present at said element and the display switch (31,41) selects one of the inputs (34 or 220) of the second special connector, - or from another signal source in the opposite case.

2. A device as claimed in claim 1, characterized in that the apparatus also comprises an internal video signal source, while the logic processor is provided with means for controlling the selection by the output switch (30) of the signal (6) from the internal source when no signal is present at the input of the front-end connection element (34) and, in addition to this, the display switch (31,41) selects one of the inputs (34 or 220) of the second special connector.

3. A device as claimed in claim 1, characterized in that it comprises a front-end/rear-end switch (29) with which either the signal from an input terminal (34) of the front-end connection element or the signal from an input terminal (220) of the rear-end connection element can be selected and applied to the display switch (31).

4. A device as claimed in claim 3, characterized in that the front-end/rear-end switch (29) is controlled by a detection circuit (28) which triggers the selection of the signal from the front-end connection element (3) if it detects the presence of a video signal at the input terminal (34) of the front-end connection element.

5. A device as claimed in claim 4, characterized in that the detection circuit (28) is of a type based on the detection of sync pulses.

6. A device as claimed in claim 3, characterized in that the apparatus also comprises an internal video signal source (25), the display switch (31) has at least three positions which correspond to the selection to the display means (24,26) of
- either the signal (a) from the internal video signal source,
- or the signal (b) from a video input terminal (120) of the first special connector,
- or the signal (c) selected by the front-end/rear-end switch.

7. A device as claimed in claim 1, characterized in that the apparatus also comprises an internal video signal source (25), the display switch (41) has at least four positions which correspond to the selection to the display means of
- either the signal (a) from the internal video signal source,
- or the signal (b) from a video input terminal of the first special connector,
- or the signal (h) from the input terminal (220) of the rear-end connection element of the second special connector,
- or the signal (g) from the input terminal (34) of the front-end connection element of the second special connector.

8. A device as claimed in claim 7, characterized in that for choosing between the two positions (h,g) of the display switch having four positions which correspond to the selection of a terminal of the second special connector, the logic processor depends on information supplied by a detection circuit (28) which triggers the selection of the input signal of the front-end connection element (3) when the detection circuit detects the presence of a video signal at this front-end connection element.

9. A device as claimed in claim 8, characterized in that the detection circuit (28) is of a type based on the detection of sync pulses.

10. A device as claimed in claim 1, characterized in that the front-end connection element (3) is provided with a chrominance terminal (35) for the input of a separate chrominance signal and the rear-end connection element (2) is provided with a chrominance input/output terminal (215) for the input or the output of a separate chrominance signal, the device has a direct connection (37) between the chrominance terminal (35) of the front-end connection element and the chrominance input/output terminal (215) of the rear-end connection element.
